# EUROPÄISCHE PATENTANMELDUNG

(11) **EP 2 390 492 A2**
(43) Veröffentlichungstag der Anmeldung: **30.11.2011**
(21) Anmeldenummer: 11160327.0
(22) Anmeldetag: 30.03.2011
(51) Int. Cl.: F02N 15/00, F02N 15/04

(54) **Elektrische Maschine mit Rutschkupplung**

(30) Priorität: 26.05.2010 DE 102010029295
(71) Anmelder: Robert Bosch GmbH, 70442 Stuttgart (DE)
(72) Erfinder: Stahl, Michael, 410100 Changsha (CN); Huemmer, Steffen, 74366 Kirchheim/N (DE)

(57) **Zusammenfassung**

Die Erfindung bezieht sich auf eine elektrische Maschine (10), insbesondere einer Startvorrichtung für dien Brennkraftmaschine, mit einem Umlaufgetriebe (83) und das mit einer Abtriebswelle (116) verbunden ist. Eine Antriebswelle (44) der elektrischen Maschine (10) ist über ein Spannelement (204), das als Rutschkupplung (224) dient, mit dem Umlaufgetriebe (83) verbunden.

## Beschreibung

### Stand der Technik

US/2,590,169 bezieht sich auf eine Torsionswelle, die einen Innenwellenteil sowie einen Außenwellenteil umfasst. Der Innenwellenteil ist von einem Außenwellenteil umschlossen. Der Innenwellenteil umfasst Längsnuten, die in korrespondierende Ausnehmungen am Innenumfang des Außenwellenteiles eingreifen. Der Außenwellenteil wiederum umfasst in einer 120 Grad-Teilung an seinem Außenumfang ausgebildete Ausnehmungen.

EP 1 300 926 A2 bezieht sich auf eine Startvorrichtung. Die Startvorrichtung dient dem Andrehen von Brennkraftmaschinen und umfasst einen Startermotor, gebildet aus einem Stator und einem Rotor, sowie einem ersten Drehmomentübertragungsteil. Dieses ist mit dem Startermotor verbunden und dient der Übertragung eines Drehmomentes auf mindestens ein nachgeordnetes Übertragungselement. Zwischen dem Rotor und dem ersten Drehmomentübertragungsteil ist zumindest ein fehlendes Element angeordnet. Dieses, zumindest ein federndes Element ist in einer Nabe zwischen dem Startermotor und dem ersten Drehmomentübertragungsteil angeordnet.

DE 297 04 209 U1 bezieht sich auf einen freiausstoßenden Starter. Gemäß dieser Lösung umfasst der freiausstoßende Starter ein vorderes Lagerschild, in dessen Lagerbohrung ein Lager zur Aufnahme eines Ritzelschaftes eingesetzt ist. Der Ritzelschaft trägt am vorderen Ende ein Einspurritzel und am hinteren Ende ein Einspurmechanismus mit einem elektrischen Andrehmotor. Das Lager für den Ritzelschaft ist als Nadellager ausgebildet, dessen Nadeln unmittelbar auf einem gehärteten Bereich des Ritzelschaftes aufliegen.

DE 199 27 905 A1 bezieht sich auf eine Andrehvorrichtung für Brennkraftmaschinen. Die Andrehvorrichtung umfasst einen Andrehmotor, dessen Antriebswelle über ein im Gehäuse der Andrehvorrichtung aufgenommenes Vorgelege mit einem axial verschiebbaren Mitnehmer in Wirkverbindung steht. Dieser ist Teil eines Einspurgetriebes mit Freilauf und Andrehritzel. Dieses ist durch axiales Verschieben des Mitnehmers mit einem Zahnkranz der Brennkraftmaschine in Eingriff bringbar. Das Vorgelege ist als Planetengetriebe ausgebildet, dessen Sonnenrad sich an dem, dem Andrehritzel zugewandten Ende der Antriebswelle befindet. Seine mit einem Hohlrad kämmenden Planetenräder sind drehbar auf Bolzen gelagert, die an einem Planetenträger angeordnet sind, der das dem Andrehmotor zugewandte Ende einer Abtriebswelle bildet. Die Abtriebswelle steht über ein Steilgewinde mit dem Mitnehmer in Wirkverbindung. Das Hohlrad ist über einen sperrbaren Freilauf gegenüber dem Gehäuse verdrehbar.

Drehmomentspitzen, die beim Starten einer Verbrennungskraftmaschine auftreten können, führen zu einer sehr starken Belastung der beteiligten Bauteile. Da es sich jedoch um Belastungsspitzen handelt, ist der im Normalbetrieb vorliegende Arbeitsbereich der betroffenen Bauteile weitaus geringeren mechanischen Belastungen ausgesetzt. Um trotzdem ein Versagen bei Überbelastung zu vermeiden, sind die entsprechenden Teile gemäß heutiger Ausführungen teilweise überdimensioniert oder anderenfalls mit stoßabsorbierenden Dämpfungseinrichtungen versehen. Gemäß heutiger Lösungen wird die Dämpfung von Belastungsspitzen, beispielsweise eines Starters einer Brennkraftmaschine, innerhalb eines Umlaufgetriebes realisiert. Dazu wird das Hohlrad eines beispielsweise als Planetengetriebe ausgebildeten Umlaufgetriebes in dämpfenden Elementen gelagert. Die eigentliche Wirkung, die von den Dämpfungselementen ausgeht, wird durch den zur Verfügung stehenden Bauraum jedoch stark eingeschränkt. Es kann im Extremfall sogar zur Zerstörung des Hohlrades, d.h. des vor mechanischen Überbelastungen zu schützenden Bauteiles kommen. Die Wirkung der Dämpfungselemente, insbesondere ausgestaltet als Dämpfungsblöcke aus Gummi bei Belastungsspitzen, erfolgt in der Regel in Umfangsrichtung der Starterachse. Die entsprechenden Dämpfungsblöcke werden komprimiert und drücken ihrerseits radial auf das aus Stahl gefertigte Polgehäuse und das in der Regel als Sintermetallbauteil ausgebildete Hohlrad. Die dadurch auftretende radiale Deformierung des Hohlrades kann dieses bis zu dessen Bruch beanspruchen.

Das Polgehäuse der Startvorrichtung wird in der Regel aus einem Stahlblech geformt oder aus einem massiven Block spanabhebend gefertigt, so z.B. durch Drehen. Das Hohlrad des Umlaufgetriebes kann auch vollständig aus Kunststoff ausgeführt sein. Das Umlaufgetriebe, insbesondere ausgestaltet als Planetengetriebe, stützt sich mittels Zapfen im Antriebslager ab. Diese Zapfen müssen die auftretenden mechanischen Belastungsspitzen aufnehmen. Sind diese sehr groß, können im Extremfall diese Zapfen brechen, so dass damit die Abstützung des Planetengetriebes unwirksam ist, was zum Versagen der Startvorrichtung führt.

### Darstellung der Erfindung

Erfindungsgemäß wird vorgeschlagen, eine Dämpfung, bzw. eine Entkopplung mechanischer Belastungsspitzen an der Schnittstelle zwischen dem Anker und dem beispielsweise als Planetengetriebe beschaffenen Umlaufgetriebes vorzusehen. Dazu wird ein Sonnenrad, des insbesondere als Planetengetriebes ausgebildeten Umlaufgetriebes, mittels einer Spannhülse mit der Ankerwelle verbunden. Dadurch lässt sich erreichen, dass einerseits der Bürstenverschleiß der Kohlebürste verringert wird, und andererseits die Rückwirkung des Startermotors auf das Umlaufgetriebe bei schlagartiger Drehzahländerung unter Berücksichtigung der Massenträgheit verringert wird, und dadurch die auftretende mechanische Belastung erheblich herabgesetzt werden kann. Dies bedeutet eine starke Herabsetzung der mechanischen Beanspruchung und damit eine starke Herabsetzung des auftretenden mechanischen Verschleißes für die betroffenen Bauteile, so dass diese für kleinere mechanische Belastungen ausgelegt werden können. Durch die Reduzierung der mechanischen Belastungsspitzen wird nicht nur das Umlaufgetriebe und dessen Komponenten, sondern auch das Kommutierungssystem entlastet, so dass eine Verringerung des Bürstenverschleißes erreicht werden kann. Durch ein einstellbares Durchrutschmoment bei Überlastung zwischen Motor und Getriebe, kann die Wirksamkeit bzw. das Auslösen der erfindungsgemäßen vorgeschlagenen Rutschkupplung zwischen Anker und Umlaufgetriebe voreingestellt werden. Die erfindungsgemäß vorgeschlagene Lösung geht einher mit einer Vermeidung radialer Belastungen einer Hohlradverzahnung des Umlaufgetriebes bei Belastungsspitzen. Die Baugruppe des Umlaufgetriebes kann optimiert werden auf die real auftretenden Belastungen und nicht auf die möglicherweise auftretenden Überlastungsspitzen, da diese durch das Ansprechen der Rutschkupplung vom Umlaufgetriebe ferngehalten werden.

Der Wellendurchmesser kann auf reale Belastungen und nicht auf Belastungsspitzen ausgelegt werden, so dass die Baugröße und das Gewicht dementsprechend reduziert werden können. Die gesamte Mechanik der Startvorrichtung lässt sich auf der erfindungsgemäß vorgeschlagenen Lösung bei Verwirklichung der Rutschkupplung auf kleinere mechanische Belastungen auslegen, so dass insgesamt gesehen, weniger Material und weniger Bauraum erforderlich werden.

### Kurze Beschreibung der Zeichnungen

Anhand der Zeichnung wird die Erfindung nachstehend eingehender beschrieben.

Es zeigt:
- Figur 1: einen Längsschnitt durch eine elektrische Maschine, insbesondere eine Startvorrichtung,
- Figur 2: eine Detailansicht in Verbindung eines Umlaufgetriebes mit der Ankerwelle der elektrischen Maschine (gespiegelte Darstellung zu Figur 1),
- Figur 3: eine Ansicht von Umlaufgetriebe und Anker (gespiegelte Darstellung zu Figur 1),
- Figur 4: eine Draufsicht auf das, insbesondere als Planetengetriebe ausgebildete Umlaufgetriebe,
- Figuren 5, 6 und 7: verschiedene Ausbildungen von Spannhülsen und
- Fig. 8: eine Explosionsdarstellung von Sonnenrad, Spannhülse und Ankerwelle der elektrischen Maschine.

### Ausführungsvarianten

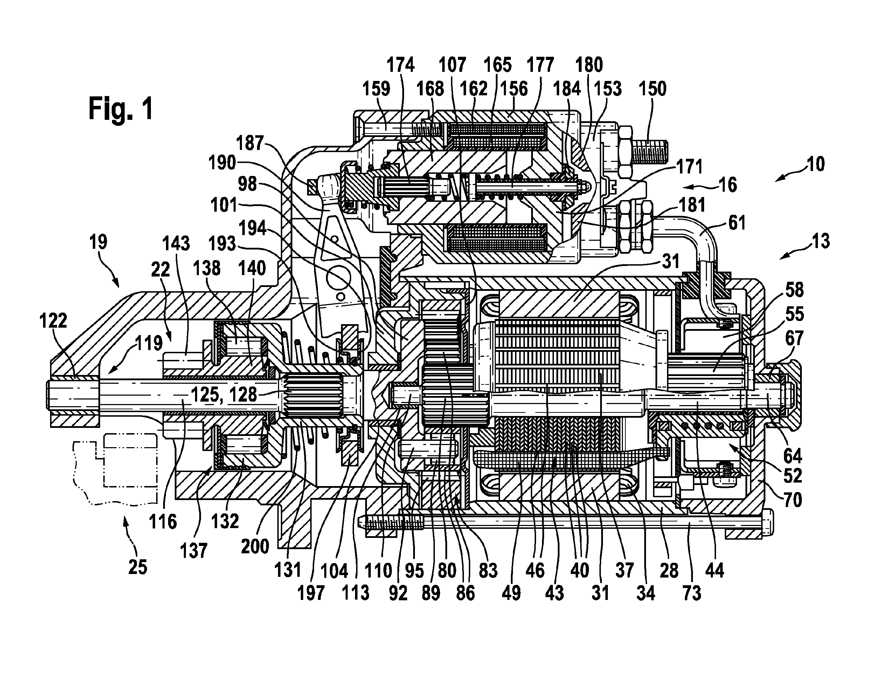

Figur 1 zeigt eine Startvorrichtung 10 in einem Längsschnitt. Die Starvorrichtung 10 weist beispielsweise einen Startermotor 13 und einen Vorspuraktuator 16 auf, der z.B. als Relais, oder Starterrelais ausgestaltet sein kann. Der Startermotor 13 und der elektrische Vorspuraktuator 16 sind an einem gemeinsamen Antriebslagerschild 19 befestigt. Der Startermotor 13 dient funktionell dazu, ein Andrehritzel 22 anzutreiben, wenn es im Zahnkranz 25 der in Figur 1 nicht dargestellten Brennkraftmaschine eingespurt ist.

Der Startermotor 13 weist als Gehäuse ein Polrohr 28 auf, das an seinem Innenumfang Polschuhe 31 trägt, die jeweils von einer Erregerwicklung 34 umwickelt sind. Die Polschuhe 31 umgeben wiederum einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem, dem Andrehritzel 22 abgewandten Ende der Antriebswelle 13, ist des Weiteren ein Kommutator 52 angebracht, der u. a. aus einzelnen Kommutatorlamellen 55 aufgebaut ist. Die Kommutatorlamellen 55 sind in bekannter Weise mit der Ankerwicklung 49 derartig elektrisch verbunden, dass sich bei Bestromung der Kommutatorlamellen 55 durch Kohlebürsten 58 eine Drehbewegung des Ankers 37 im Polrohr 28 ergibt. Eine zwischen dem elektrischen Antrieb 16 und dem Startermotor 13 angeordnete Stromzufuhr 61 versorgt im Einschaltzustand sowohl die Kohlebürsten 58 als auch die Erregerwicklung 34 mit Strom. Die Antriebswelle 13 ist kommutatorseitig mit einem Wellenzapfen 64 in einem Gleitlager 67 abgestützt, welches wiederum in einem Kommutatorlagerdeckel 70 ortsfest gehalten ist. Der Kommutatorlagerdeckel 70 wiederum wird mittels Zugankern 73, die über den Umfang des Polrohrs 28 verteilt angeordnet sein können, so z.B. Schrauben, beispielsweise 2, 3 oder 4 Stück, im Antriebslagerschild 19 befestigt. Dabei stützt sich das Polrohr 28 am Antriebslagerschild 19 ab und der Kommutatorlagerdeckel 70 am Polrohr 28.

In Antriebsrichtung gesehen, schließt sich an den Anker 37 ein Sonnenrad 80 an, das Teil eines Umlaufgetriebes 83, das insbesondere als Planetengetriebe ausgebildet ist, ist. Das Sonnenrad 80 ist von mehreren Planetenrädern 86 umgeben, üblicherweise drei Planetenräder 86, die mittels Wälzlagern 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98 als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist. Das Gleitlager 113 wiederum ist in einer zentralen Bohrung des Planetenträgers 98 aufgenommen. Der Planetenträger 98 ist einstückig mit der Abtriebswelle 116 verbunden. Die Abtriebswelle 116 ist mit ihrem vom Zwischenlager 101 abgewandten Ende 119 in einem weiteren Lager 122, welches im Antriebslagerschild 19 befestigt ist, abgestützt.

Die Abtriebswelle 116 ist in verschiedene Abschnitte aufgeteilt: So folgt dem Abschnitt, der im Gleitlager 104 des Zwischenlagers 101 gelagert ist, ein Abschnitt mit einer Geradverzahnung 125, die z.B. als Innenverzahnung ausgebildet sein kann. Diese ist Teil einer Wellen- Naben-Verbindung 128. Die Wellen-Naben-Verbindung 128 ermöglicht in diesem Falle das axial geradlinige Gleiten eines Mitnehmers 131. Der Mitnehmer 131 ist ein hülsenartiger Fortsatz, der einstückig mit einem topfförmigen Außenring 132 des Freilaufes 137 verbunden ist. Der Freilauf 137, bei dem es sich beispielsweise um ein Richtgesperre handeln kann, besteht des Weiteren aus dem Innenring 140, der radial innerhalb des Außenringes 132 angeordnet ist. Zwischen dem Innenring 140 und dem Außenring 132 sind Klemmkörper 138 angeordnet. Die Klemmkörper 138 verhindern in Zusammenwirkung mit dem Innenring 140 und dem Außenring 132 eine Relativverdrehung zwischen dem Außenring 132 und dem Innenring 140 in eine zweite Richtung. Mit anderen Worten: Der Freilauf 137 ermöglicht eine umlaufende Relativbewegung zwischen dem Innenring 140 und dem Außenring 132 nur in eine Richtung. In diesem Ausführungsbeispiel ist der Innenring 140 einstückig mit dem Andrehritzel 122 und der Schrägverzahnung 143, die als Außenschrägverzahnung ausgebildet sein kann, ausgeführt. Das Andrehritzel 22 kann alternativ auch als geradverzahntes Ritzel ausgeführt sein. Statt elektromagnetisch erregtem Polschuh 31 mit Erregerwicklung 34 könnten auch permanentmagnetisch erregte Pole eingesetzt werden.

Die elektrische Vorspuraktuator 16 bzw. der Anker 168 haben darüber hinaus auch die Aufgabe, mit einem Zugelement 187, einen im Antriebslagerschild 19 drehbeweglich angeordneten Hebel 190 zu bewegen. Der Hebel 190 ist üblicherweise als Gabelhebel ausgeführt und umgreift zwei Scheiben 193/194 mit nicht dargestellten "Zinken" an deren Außenumfang, um einen, zwischen diesen eingeklemmten ringförmigen Mitnehmer 197 zum Freilauf 137 hin, gegen den Widerstand der Feder 200 zu bewegen, und dadurch das Andrehritzel 22 in den Zahnkranz 25 einzuspuren.

Nachfolgend wird der Vollständigkeit halber auf den Einspurmechanismus eingegangen. Der elektrische Vorspuraktuator 16 weist einen Bolzen 150 auf, der ein elektrischer Kontakt ist und im Falle des eingebaut seins im Fahrzeug an den Pluspol einer elektrischen Starterbatterie, die in Figur 1 nicht dargestellt ist, angeschlossen ist. Der Bolzen 150 ist durch einen Deckel 153 hindurchgeführt. Ein zweiter Bolzen 152 stellt einen Anschluss für den elektrischen Startermotor 13 dar, der über die Stromzufuhr 61 (dicke Litze) versorgt wird. Der Deckel 153 schließt ein Gehäuse 156 ab, welches mittels mehrerer Befestigungselemente 159, so z.B. Schrauben, am Antriebslagerschild 19 befestigt ist. In dem elektrischen Vorspuraktuator 16 ist eine Schubeinrichtung 160 zur Ausübung einer Zugkraft auf den Gabelhebel 190 und eine Schalteinrichtung 161 angeordnet. Die Schubeinrichtung 161 umfasst eine Wicklung 162 und die Schalteinrichtung 161 umfasst eine Wicklung 165. Die Wicklung 162 der Schubeinrichtung 160 und der Wicklung 165 der Schalteinrichtung 161 bewirken, jeweils im eingeschalteten Zustand, ein elektromagnetisches Feld, welches verschiedene Bauteile durchströmt. Die Wellen-Naben-Verbindung 128 kann statt mit einer Geradverzahnung 125 auch mit einer Stahlgewindeverzahnung versehen sein. Es sind dabei die Kombinationen möglich, wonach a) das Andrehritzel 22 schrägverzahnt ist und die Wellen-Naben-Verbindung 128 eine Geradverzahnung 125 enthält, b) das Andrehritzel 22 schrägverzahnt ausgebildet ist und die

Wellen-Naben-Verbindung 128 eine Stahlgewindeverzahnung aufweist oder c) das Andrehritzel 22 geradverzahnt ist und die Wellen-Naben-Verbindung 128 eine Stahlgewindeverzahnung aufweist.

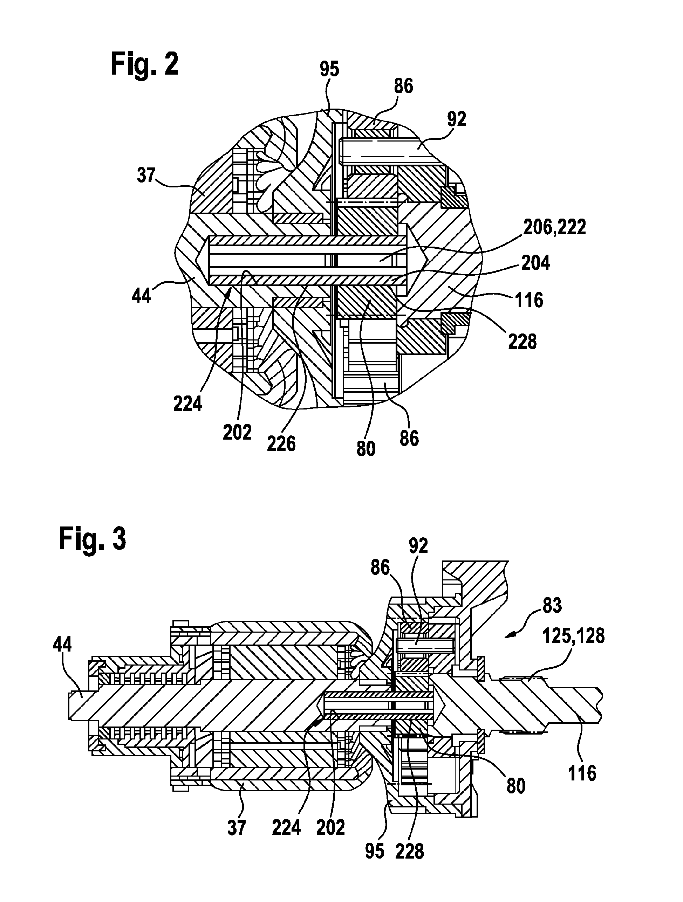

Figur 2 zeigt eine Ausführungsvariante einer reibschlüssigen Verbindung zwischen der Antriebswelle und der Abtriebswelle einer elektrischen Maschine. Figur 2 zeigt, dass in dieser Ausführungsvariante eine Spannelement 204 eingesetzt wird, bei dem es sich insbesondere um ein hülsenförmig ausgebildetes Spannelement 204 handelt, welches eine durchgängige Längsschlitzung 222 aufweist. Das in Figur 2 im Schnitt dargestellte Spannelement 204 wird bevorzugt aus Federstahl gefertigt. Das Spannelement 204 nimmt einerseits das Sonnenrad 80 des Umlaufgetriebes 83, das insbesondere als Planetengetriebe ausgebildet ist, im Reibschluss auf und andererseits ist das beispielsweise hülsenförmig ausgebildete Spannelement 204 in einer Sacklochbohrung 202 der Antriebswelle 44 in einem ersten Presssitz 226 aufgenommen. Auf der Antriebswelle 44 sind - in Figur 2 nur angedeutet - die Teile des Ankers 37 der Startvorrichtung 10 gelagert.

Wie aus der Darstellung gemäß Figur 2 hervorgeht, sind die Abtriebswelle 44, welche die Ankerwelle der elektrischen Maschine 10 darstellt und die Abtriebswelle 116 über das in der in Figur 2 dargestellten Ausführungsvariante in Hülsenform beschaffene Spannelement 204 reibschlüssig miteinander verbunden. Mit dem Sonnenrad 80 kämmen Planetenräder 86 des Umlaufgetriebes 83, die an den Achszapfen 92 gelagert sind, die sich wiederum in einem in Figur 2 nicht dargestellten Mitnehmer (vergleiche Position 197 in Figur 1) gelagert sind. Die Planetenräder 86, bevorzugt drei an der Zahl, kämmen mit einem Hohlrad 95, welches ebenfalls Bestandteil des Umlaufgetriebes 83 ist, das insbesondere als Planetengetriebe ausgeführt ist.

Gemäß der in Figur 2 dargestellten Ausführungsvariante der erfindungsgemäß vorgeschlagenen Lösung dient das als Spannhülse oder als Spannstift ausbildbare Spannelement 204 als Rutschkupplung 224, so dass Drehmomentspitzen, die beispielsweise beim Starten einer Verbrennungskraftmaschine auftreten und eine sehr starke Belastung der Bauteile herbeiführen können, abgefangen werden können. Durch den Einsatz des erfindungsgemäß vorgeschlagenen Spannelementes 204 sind der Startermotor 13 der Startvorrichtung 10 und das Umlaufgetriebe 83 voneinander entkoppelt. Die Rückwirkung des Startermotors 13 auf die Mechanik des Umlaufgetriebes 83, beispielsweise durch schlagartige Drehzahländerung sowie Massenträgheit, wird erheblich verringert und damit werden die auf die beteiligten Bauteile einwirkenden mechanischen Belastungen abgesenkt. Dies wiederum führt zu einer Reduktion des Verschleißes, ferner können die betroffenen Bauteile für kleinere Belastungen dimensioniert werden. Entsprechend der realisierten Presssitze 226 bzw. 228 des Spannelementes 204 in der Sacklochbohrung 202 einerseits und des Sonnenrades 80 auf dem Spannelement 204 am zweiten Presssitz 228 andererseits, kann ein einstellbares bzw. skaliertes Durchrutschen bei auftretenden Überbelastungen zwischen dem Startermotor 13 und dem Umlaufgetriebe 83 erreicht werden. Das Umlaufgetriebe 83 kann somit hinsichtlich der real auftretenden Belastungen ausgelegt werden, es müssen keine Belastungsspitzen berücksichtigt werden, da diese über die Rutschkupplung 224, dargestellt durch das Spannelement 204, abgefangen werden. Das erfindungsgemäß vorgeschlagene Spannelement 204 stellt die weichest mögliche Verbindung zwischen dem Umlaufgetriebe 83 und der Antriebswelle 44 dar. Es können zur Verbesserung des Reibschlusses relativ große Toleranzen zwischen einer Mantelfläche des hülsenförmig oder als Spannstift ausgebildeten Spannelementes 204 und dem beteiligten Fügepartner, d.h. dem Innendurchmesser des Sonnenrades 80 sowie des Innendurchmessers der Sacklochbohrung 202 in der Antriebswelle 44 zugelassen werden. Die erfindungsgemäß vorgeschlagene Rutschkupplung 224, gebildet durch das Spannelement 204, bietet darüber den Vorteil, dass ein mehrmaliges Auslösen möglich ist, wodurch der Betrieb der Startvorrichtung 10 jedoch nicht beeinträchtigt wird. Aufgrund der durchgängig verlaufenden Längsschlitzung 206, 222 des Spannelementes 204 und dessen Herstellung aus Federstahl, können die definierten Pressungen am ersten Presssitz 224 in der Sacklochbohrung 202, bzw. am zweiten Presssitz 228 in Bezug auf das Sonnenrad 80, dauerhaft beibehalten werden. Selbst wenn es im Betrieb zum Auslösen der Rutschkupplung 224 kommt, ist ein weiterer Betrieb der Startvorrichtung gewährleistet, da durch die dem Spannelement 204 inne wohnende Elastizität dessen Anlage die Presssitze 226 bzw. 228 aufrecht erhält, im Gegensatz zum Einsatz eines massiv ausgebildeten Bolzens. Dieser verkraftet nur geringe Anzahl von Auslöse-, bzw. Überlastereignisse, da ein schneller Verschleiß der Passung erfolgt aufgrund eines schnellen Egalisierens von Rauhigkeiten an der Mantelfläche des Bolzens.

Der Darstellung gemäß Figur 3 sind die Komponenten Antriebswelle 44, d.h. Ankerwelle des Startermotors 13, der Anker 37, das Umlaufgetriebe 83 sowie die Abtriebswelle 116 in Zusammenschau zu entnehmen.

Aus der Darstellung gemäß Figur 3 ergibt sich, dass die Antriebswelle 44 des Startermotors 13 in der Sacklochbohrung 202 das hülsenförmig ausgebildete Spannelement 204 aufnimmt, welches als Rutschkupplung 224 dient.

Die Planetenräder 86 des insbesondere als Planetengetriebe ausgebildeten Umlaufgetriebes 83 kämmen mit dem Sonnenrad 80, das im zweiten Presssitz 228 auf einem Ende des hülsenförmig ausgebildeten Spannelementes 204 aufgenommen ist. Die Abtriebswelle 116 umfasst des Weiteren einen ringförmigen Mitnehmer 197, in dem die Achszapfen 92 gelagert sind, welche ihrerseits die Planetenräder 86 aufnehmen. Diese kämmen mit der Innenverzahnung des Hohlrades 95.

Figur 3 zeigt des Weiteren, dass am Umfang der Abtriebswelle 116 die Verzahnung 125 ausgebildet ist, die als Gradverzahnung oder Schrägverzahnung ausgeführt sein kann.

Alternativ zur Darstellung gemäß Figur 3, in der das Umlaufgetriebe 83 und die Antriebswelle 44 über das Spannelement 204 voneinander entkoppelt sind, wäre auch denkbar, die Ankerwicklungen 49, den Kommutator 52 auf einem Spannelement zu montieren und dieses wiederum im Reibschluss auf den Mantel der Antriebswelle 44 zu lagern. Dadurch ergäbe sich eine Entkopplung der Masse des Ankers 37 vom Umlaufgetriebe 83.

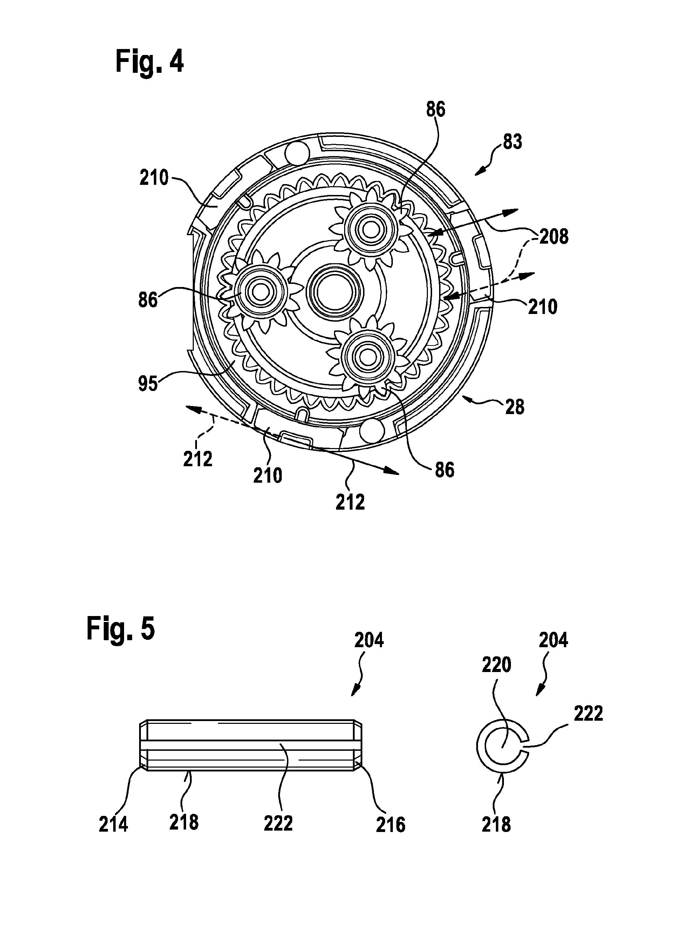

Figur 4 zeigt eine Draufsicht auf das Umlaufgetriebe.

Figur 4 zeigt, dass das Umlaufgetriebe 83 insbesondere als Planetengetriebe ausgebildet ist, welches vorzugsweise drei Planetenräder 86 aufweist. Die Außenverzahnung der Planetenräder 86 kämmen mit einer Innenverzahnung des Hohlrades 95 des Umlaufgetriebes 83. Das Umlaufgetriebe 83 ist im Betrieb einer Radialverformung 208 ausgesetzt, welche über Dämpfungselemente 210, die am Umfang des Hohlrades 95 angeordnet sind, kompensiert wird. Die Belastungen, denen die in einer 120-Grad-Teilung angeordneten Dämpfungselemente 210 ausgesetzt sind, ist durch den Doppelpfeil 212 angedeutet. Die Belastung 212 verläuft im Wesentlichen in Umfangsrichtung des Umlaufgetriebes 83.

Den Figuren 5, 6 und 7 sind verschiedene Ausführungsvarianten des Spannelementes zu entnehmen.

So zeigt beispielsweise Figur 5 die Ausbildung eines hülsenförmig ausgebildeten Spannelementes 204, das eine durchgängige Längsschlitzung 222 aufweist. In der Ausführungsvariante des Spannelementes 204 gemäß Figur 5, weist dieses eine erste Kegelfase 214 und eine zweite Kegelfase 216 auf.

Die durchgängige Längsschlitzung 222 erstreckt sich von der ersten Kegelfase 214 durchgängig zur zweiten Kegelfase 216 in eine Mantelfläche 218 des Spannelementes 204. Die Mantelfläche 218 umschließt einen Hohlraum 220. Das in Figur 5 dargestellte Spannelement 204 in Hülsenform wird bevorzugt aus Federstahl gefertigt.

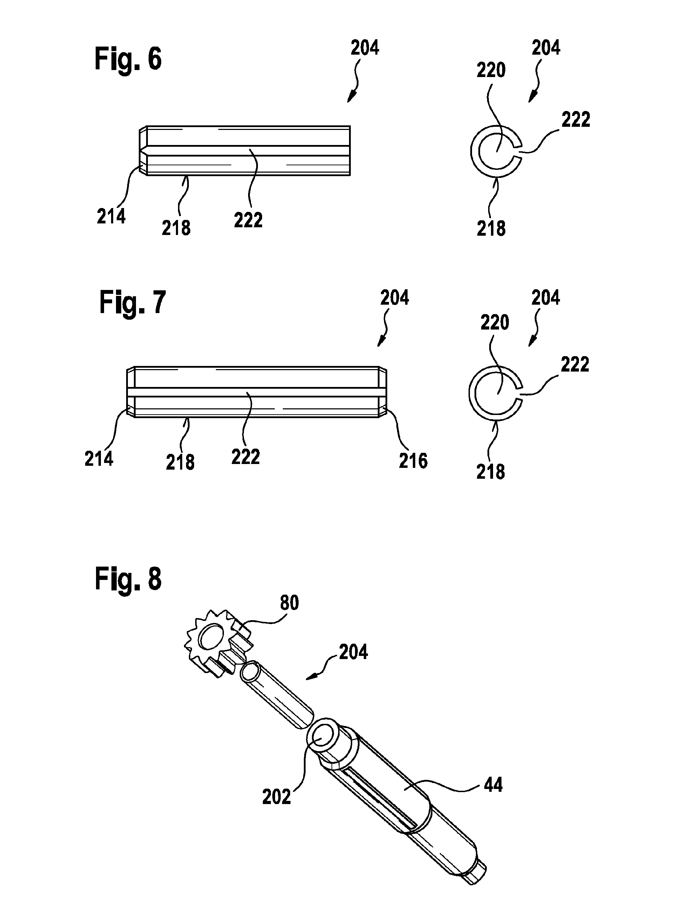

Figur 6 zeigt die Ausführungsvariante eines Spannelementes, ebenfalls mit einer durchgängigen Schlitzung 222. In der in Figur 6 dargestellten Ausführungsvariante des Spannelementes 204 ist lediglich an einer Stirnseite desselben, die erste Kegelfase 214 angebracht. Die Mantelfläche 218 des in Figur 6 dargestellten Spannelementes 204 begrenzt den Hohlraum 220.

Figur 7 zeigt ein Spannelement 204, das als Spannstift ausgebildet ist. Im Vergleich zu den Ausführungsvarianten in den Figuren 5 und 6 weist dieses eine größere axiale Länge auf, und umfasst an beiden Enden Kegelfasern 214 und 216.

Aufgrund der federnden Ausbildung der hülsenförmig ausgebildeten Spannelemente 204 ist deren mechanischer Verschleiß im Vergleich zu einem massiv ausgebildeten Bolzen relativ gering. Insbesondere vermögen die hülsenförmig ausgebildeten Spannelemente 204 gemäß den Darstellungen in Figur 5 und 6 nach einem Auslösen eine Fortsetzung des Betriebes der elektrischen Maschine, da nach dem Auslösen und dem Erreichen des zulässigen übertragbaren Drehmomentes durch Aufrechterhaltung der Presssitze 226 bzw. 228 der Normalbetrieb der Startvorrichtung gewährleistet werden kann, was bei einem massiv ausgebildeten Bolzen nicht möglich ist, da diesem die Elastizität eines hülsenförmig ausgebildeten Spannelementes 4, das als Rutschkupplung 224 dient, fehlt.

Figur 8 zeigt in einer Explosionsdarstellung, das Sonnenrad 80, welches im zweiten Presssitz 228 am Umfang des Spannelementes 204 aufgenommen ist, sowie die Sacklochbohrung 202, die sich an einer Stirnseite der Antriebswelle 44 befindet. In der Sacklochbohrung 202 ist das dem Sonnenrad 80 gegenüberliegende Ende des hülsenförmig ausgebildeten Spannelementes 204 im ersten Presssitz 226 aufgenommen.

In zeichnerisch nicht dargestellten Ausführungsvarianten besteht die Möglichkeit, das Ankerpaket des Ankers 37, d.h. die Ankerlamellen 40 sowie die mindestens eine Ankerwicklung 49, zusammen mit dem Kommutator 52 auf einem Spannelement 204 zu montieren, die wiederum auf die Mantelfläche der Antriebswelle 44, d.h. der Ankerwelle des Startermotors 13 aufgesteckt wird. Auch gemäß dieser denkbaren Ausführungsvariante wird die Masse des Ankers 37 vom Sonnenrad 80 des Umlaufgetriebes 83 entkoppelt. Aufgrund der um ein vielfaches größeren Fläche können dann auch größere Drehmomente zugelassen und übertragen werden.

Die erfindungsgemäß vorgeschlagene Lösung zeichnet sich insgesamt gesehen dadurch aus, dass eine Reduzierung von Belastungssitzen, die auf das Kommutierungssystem wirken, verringert werden kann, so dass der Bürstenverschleiß der Kohlebürsten 58 reduziert ist. Es entsteht keine radiale Belastung in der Verzahnung des Hohlrades 95 bei auftretenden Belastungsspitzen, insbesondere beim Start der Verbrennungskraftmaschine. Des weiteren ergibt sich eine Auslegung des Umlaufgetriebes 83 dahingehend, dass dieses auf real auftretende Belastungen und nicht auf Belastungssitzen hin ausgelegt werden muss, was auch Auswirkungen auf den Wellendurchmesser der Antriebswelle 44 bzw. der Abtriebswelle 116 hat.

## Patentansprüche

1. Elektrische Maschine, insbesondere Startvorrichtung (10) für eine Brennkraftmaschine, mit einem Umlaufgetriebe (83), das mit einer Abtriebswelle (116) verbunden ist, **dadurch gekennzeichnet, dass** eine Antriebswelle (44) der elektrischen Maschine über ein als Rutschkupplung (224) dienendes Spannelement (204) mit dem Umlaufgetriebe (83) verbunden ist.

2. Elektrische Maschine gemäß Anspruch 1, **dadurch gekennzeichnet, dass** das Spannelement (204) eine durchgängige Längsschlitzung (222) aufweist.

3. Elektrische Maschine gemäß einem der vorhergehenden Ansprüche, **dadurch gekennzeichnet, dass** das Spannelement (204) als Spannhülse oder als Spannstift beschaffen ist.

4. Elektrische Maschine gemäß einem der vorhergehenden Ansprüche, **dadurch gekennzeichnet, dass** das Spannelement (204) an zumindest einer Stirnseite mit einer Kegelfase (214, 216) versehen ist.

5. Elektrische Maschine gemäß einem der vorhergehenden Ansprüche, **dadurch gekennzeichnet, dass** das Spannelement (204) im Reibschluss mit einem Sonnenrad (80) des Umlaufgetriebes (83) und mit der Abtriebswelle (116) verbunden ist.

6. Elektrische Maschine gemäß einem der vorhergehenden Ansprüche, **dadurch gekennzeichnet, dass** das Spannelement (204) in einem ersten Presssitz (226) in einer Bohrung, insbesondere einer Sacklochbohrung (202), der Antriebswelle (44) aufgenommen ist.

7. Elektrische Maschine gemäß einem der vorhergehenden Ansprüche, **dadurch gekennzeichnet, dass** ein Antriebselement (80) des Umlaufgetriebes (83), insbesondere das Sonnenrad (80) mit einem zweiten Presssitz (228) auf dem Spannelement (204) aufgenommen ist.

8. Elektrische Maschine gemäß einem der vorhergehenden Ansprüche, **dadurch gekennzeichnet, dass** Lamellen (40) des Ankers (37) der elektrischen Maschine (10) sowie mindestens eine Ankerwicklung (49) auf dem Spannelement (204) aufgenommen sind, das auf der Antriebswelle (44) im Reibschluss aufgenommen ist.

9. Elektrische Maschine mit einer der vorhergehenden Ansprüche, **dadurch gekennzeichnet, dass** Lamellen (40) des Ankers (37) der elektrischen Maschine (10) sowie mindestens eine Ankerwicklung (49) und ein Kommutator (52) auf dem Spannelement (204) aufgenommen sind, das auf der Antriebswelle (44) im Reibschluss aufgenommen ist.

10. Elektrische Maschine gemäß einem der vorhergehenden Ansprüche, **dadurch gekennzeichnet, dass** die Masse des Ankers (37) vom Umlaufgetriebe (83) entkoppelt ist.
